# EUROPÄISCHE PATENTANMELDUNG

(11) **EP 2 782 225 A1**
(43) Veröffentlichungstag der Anmeldung: **24.09.2014**
(21) Anmeldenummer: 13159963.1
(22) Anmeldetag: 19.03.2013
(51) Int. Cl.: H02K 19/36, H02K 5/12, H02K 11/00

(54) **Sternpunkt eines Generators**

(71) Anmelder: Siemens Aktiengesellschaft, 80333 München (DE)
(72) Erfinder: Kowalski, Waldemar, 45472 Mülheim an der Ruhr (DE); Lehmann, Christoph, 47506 Neukirchen-Vluyn (DE)

(57) **Zusammenfassung**

Die Erfindung betrifft eine elektrodynamische Maschine (1) umfassend ein Gehäuse (2) und ein Läufer (4) sowie ein Sternpunkt (5), wobei der Sternpunkt (5) innerhalb des Gehäuses (2) angeordnet ist und mittels Kurzschlussbrücken (13, 15) miteinander verschaltet ist, wobei die Kurzschlussbrücke derart ausgebildet wird, dass eine elektrische Trennung innerhalb des Generatorgehäuses (2) der Sternpunktenden (10, 11, 12) möglich ist.

## Beschreibung

Die Erfindung betrifft eine elektrodynamische Maschine umfassend einen drehbar gelagerten Läufer und einen um den Läufer angeordneten Ständer und einem um den Ständer angeordnetem Gehäuse, wobei der Ständer eine Ständerwicklung mit drei Wicklungen aufweist, wobei die Wicklungen jeweils ein Ableitungsende und ein Sternpunktende aufweisen, wobei die Sternpunktenden über eine Kurzschlussbrücke miteinander zu einem Sternpunkt verbunden sind, wobei der Sternpunkt innerhalb des Gehäuses liegt.

In elektrischen Generatoren als Ausführungsform einer elektrodynamischen Maschine wird elektrische Energie erzeugt. Dazu wird ein um eine Rotationsachse drehbar gelagerter Läufer innerhalb eines Ständers angeordnet, wobei der Läufer ein Magnetfeld erzeugt, das um die Rotationsachse bewegt wird. Dieses drehende Magnetfeld induziert in der im Ständer angeordneten Wicklung eine elektrische Spannung. Da die Generatoren im Betrieb eine Temperaturerhöhung erfahren, müssen diese geeignet gekühlt werden. Es ist bekannt, Generatoren mit Luft, Sauerstoff oder Wasserstoff zu kühlen. Dazu ist es erforderlich, den Ständer in der Gehäusewand derart auszubilden, dass ein Austreten von Kühlmedium wirksam vermieden ist.

Allerdings führt dies dazu, dass die im Ständer erzeugte elektrische Energie mittels sogenannter Stromdurchführungen aus dem Gehäuse nach außen geführt werden muss, wobei die Stromdurchführungen gegenüber dem Gehäuse keine Leckagen zulassen sollten. Der Aufwand für die Herstellung der Stromdurchführungen und deren Anordnung im Gehäuse ist vergleichsweise aufwändig, da wegen der vorhandenen Hochspannungen und -ströme, der erforderlichen Kurzschlussfestigkeit sowie wegen der Gasdruck- und Gasdichtigkeitsanforderungen hohe elektrische, thermische sowie mechanische Anforderungen gestellt werden.

In der Regel werden bei einem elektrischen Generator sechs Stromdurchführungen benötigt. In solchen Generatoren sind drei Wicklungen vorhanden, die auch als Drehstromwicklung bezeichnet werden und eine Phase der dreiphasigen Wechselstromversorgung darstellen. Jede Phase umfasst einen Anfangs-und Endpunkt, wobei jeweils der Anfangs- und Endpunkt über jeweils eine Stromdurchführung aus dem Gehäuse geführt wird. Bei drei Phasen sind somit sechs Stromdurchführungen erforderlich. Es wird hierzu unterschieden zwischen dem Anfangspunkt der Wicklung, der als Phasenklemme bezeichnet wird und dem Endpunkt der Wicklung, der als Sternpunktklemme bezeichnet wird. Es ist bekannt, die Sternpunktklemmen, die über die Stromdurchführungen aus dem Gehäuse geführt werden, zu einem Sternpunkt außerhalb des Generators zusammen zuschalten. Die drei Phasenklemmen werden für den Energietransport an einem Blocktrafo angekoppelt.

Die Isolierung der Wicklung, insbesondere der Ständerwicklung, muss regelmäßig überprüft werden, das bedeutet, dass verschiedene elektrische Messungen wie z. B. Widerstandsmessungen und Spannungsproben durchgeführt werden müssen, wobei diese Messungen offline durchgeführt werden. Diese Messungen werden bei den Phasen einzeln gemessen. Daher werden die Windungsanschlüsse mit Hilfe von sogenannten Stromdurchführungen aus dem Gehäuse geführt.

Der Sternpunkt eines Turbogenerators ist außerhalb des Gehäuses kurzgeschlossen und wird mit einem Sternpunktkasten abgedeckt. Die Phasenanschlüsse liegen in aufwändig geschirmten Ausleitungsrohren und können nur unter extrem großen Demontageaufwand zugängig gemacht werden. Um Messungen an den einzelnen Phasen eines elektrischen Generators durchführen zu können, muss dieser Stromdurchführungskasten geöffnet werden und der Sternpunkt, der aus verschraubten Kurzschlussbrücken besteht, getrennt und nach der erfolgten Messung wieder geschlossen werden.

Das Öffnen des Kastens, die Trennung der einzelnen Kurzschlussbrücken, die die Stromdurchführungen verbinden und den Sternpunkt bilden, sowie die Wiederherstellung der Kontaktstellen nach dem Messvorgang sind sehr aufwändig.

Die Erfindung möchte hier Abhilfe schaffen.

Es ist daher Aufgabe der Erfindung, eine elektrodynamische Maschine anzugeben, bei der eine Prüfmessung einfacher durchgeführt werden kann.

Gelöst wird diese Aufgabe durch eine elektrodynamische Maschine umfassend einen drehbar gelagerten Läufer und einen um den Läufer angeordneten Ständer und einem um den Ständer angeordneten Gehäuse, wobei der Ständer eine Ständerwicklung mit drei Wicklungen aufweist, wobei die Wicklungen jeweils ein Ableitungsende und ein Sternpunktende aufweisen, wobei die Sternpunktenden über eine Kurzschlussbrücke miteinander zu einem Sternpunkt verbunden sind, wobei der Sternpunkt innerhalb des Gehäuses liegt, wobei die Kurzschlussbrücke derart ausgebildet ist, dass eine elektrische Trennung zwischen den Sternpunktenden erfolgen kann.

Die Erfindung geht von dem Gedanken aus, dass zunächst der Sternpunkt innerhalb des Gehäuses angeordnet wird und die Trennung der einzelnen Phasen durch Entfernen der Kurzschlussbrücken innerhalb des geschlossenen Gehäuses erfolgt. Dadurch ist ein mühseliges Abnehmen des Sternpunktkastens nicht mehr nötig. Genauso ist ein zeitraubendes Trennen der einzelnen Phasen mit den Kurzschlussbrücken nicht mehr nötig. Dies führt zu einer enormen Zeitersparnis, da die Stromdurchführungen gänzlich entfallen.

Das Durchführen von Drehmomentkontrollen bei den Schrauben, die für den Sternpunktkasten benötigt werden entfällt, was zu einer gleichbleibenden Qualität der Verschaltung des Sternpunktes durch Benutzung der Steckverbindung führt. Ebenso werden Ersatzteile wie neue Verschraubungselemente bei der erfindungsgemäßen Lösung nicht mehr benötigt.

Wesentliches Merkmal der Erfindung ist, dass die Kurzschlussbrücke, die die Sternpunktenden elektrisch miteinander verbindet, nun innerhalb des Gehäuses angeordnet ist und auch innerhalb des Gehäuses von den Sternpunktenden getrennt werden kann.

Vorteilhafte Weiterbildungen sind in den Unteransprüchen angegeben.

In einer ersten vorteilhaften Weiterbildung erfolgt die elektrische Trennung durch Bewegen der Kurzschlussbrücke. Somit wird vorteilhafterweise vorgeschlagen, durch mechanisches Bewegen der Kurzschlussbrücke die elektrische Trennung hervorzurufen.

Erfindungsgemäß erfolgt dies vorteilhafterweise durch Ziehen der Kurzschlussbrücke in eine Richtung. Dabei sollte dieses Ziehen derart erfolgen, dass eine vollständig elektrische Trennung über die Kurzschlussbrücke erfolgt.

In vorteilhafter Weiterbildung erfolgt das Gegenteil der elektrischen Trennung, nämlich die elektrische Verbindung durch Drücken in die Richtung zu den Sternpunktenden hin. Die Kontakte sollten hierbei derart ausgeführt sein, dass ein häufiges Verbinden und Trennen zu keinen großen Verschleißeffekten führt.

In besonders vorteilhafter Weise erfolgt das Bewegen der Kurzschlussbrücke außerhalb des Gehäuses. Das bedeutet, dass es eine mechanische Kopplung gibt zwischen der Kurzschlussbrücke und einem Bauelement, mit dem eine Kraft auf die Kurzschlussbrücke in der Richtung ausgeübt werden kann. Die Bedienung dieses Bauelementes erfolgt hierbei von außerhalb des Gehäuses.

In einer weiteren vorteilhaften Weiterbildung erfolgt die Bewegung der Kurzschlussbrücke innerhalb des Gehäuses elektrisch. Somit soll die Kurzschlussbrücke mechanisch mit einem weiteren Bauelement verbunden werden, mit dem die Bewegung der Kurzschlussbrücke elektrisch erfolgen kann.

Dafür wird in einer vorteilhaften Weiterbildung die Kurzschlussbrücke mit einem im Wesentlichen unmagnetischen Gestänge und das Gestänge mit einer Vorrichtung zum Heben und Senken verbunden. Vorteilhafterweise muss hier ein unmagnetisches Gestänge benutzt werden, da magnetische Kräfte in elektrodynamischen Maschinen stets vorkommen können und bei einem magnetischen Gestänge eine störende Kraft hervorrufen würde. Um dieser störenden Kraft entgegenzuwirken sollte das Gestänge unmagnetisch ausgebildet sein.

In vorteilhafter Weise kann die Vorrichtung einen Motor umfassen, der derart dimensioniert sein sollte, dass die Kraft genügend groß ist, um die Kurzschlussbrücke von den Sternpunktenden zu trennen.

In vorteilhafter Weise werden die Sternpunktenden mit Messstromdurchführungen außerhalb des Gehäuses verlegt. Dies soll zu dem gewünschten Effekt führen, dass sobald die Kurzschlussbrücken entfernt wurden, die Stromdurchführungen mit Messleitungen verbunden werden, um Ströme in den Phasen messen zu können. Dadurch können Schäden in der Isolation erkannt werden.

In vorteilhafter Weise werden hier Stromwandler zum Messen der einzelnen Phasen eines Sternpunktes angeordnet.

Ausführungsbeispiele der Erfindung werden nachfolgend anhand der Zeichnung beschrieben. Diese soll die Ausführungsbeispiele nicht maßgeblich darstellen, vielmehr ist die Zeichnung, wo zur Erläuterung dienlich, in schematisierter und/oder leicht verzerrter Form ausgeführt. Im Hinblick auf Ergänzungen der in der Zeichnung unmittelbar erkennbaren Lehren wird auf den einschlägigen Stand der Technik verwiesen. Im Einzelnen zeigt die Zeichnung in:
- FIG 1: eine perspektivische Ansicht eines Generators gemäß dem Stand der Technik;
- FIG 2: eine schematische Schnittansicht eines erfindungsgemäßen Teils eines Generators;
- FIG 3: eine andere perspektivische Darstellung eines erfindungsgemäßen Teils eines Generators.

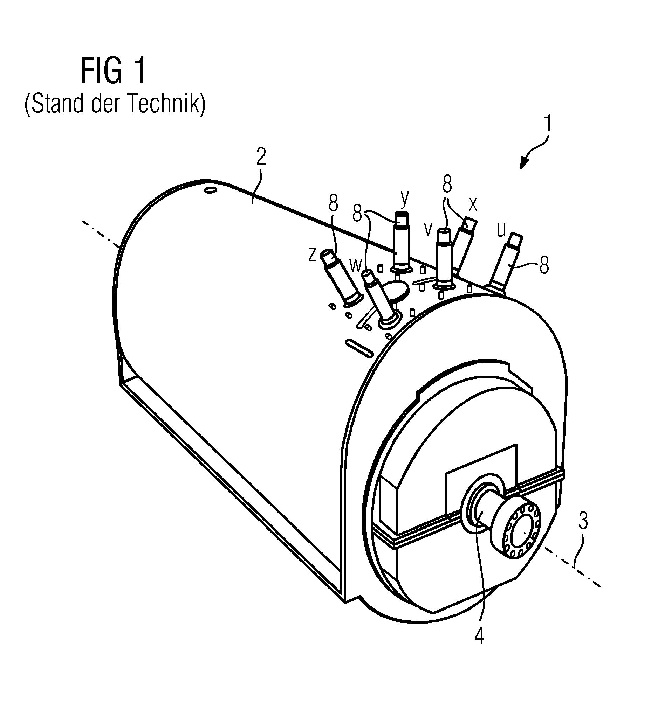

Die FIG 1 zeigt eine perspektivische Ansicht eines Generators 1 als Ausführungsform einer elektrodynamischen Maschine. Solche elektrischen Generatoren liefern elektrische Energie zwischen zehn Megawatt und 1500 Megawatt. Ein elektrischer Motor ist beispielsweise eine weitere Ausführungsform einer elektrodynamischen Maschine 1.

Der Generator umfasst ein Gehäuse 2 sowie einen im Gehäuse 2 um eine Rotationsachse 3 drehbar gelagerten Läufer 4. Der Läufer 4 umfasst in FIG 1 nicht näher dargestellte Wicklungen, die mit den Kleinbuchstaben u, v und w bezeichnet sind. Im Bereich der kommunalen Energieversorgung sind die Generatoren üblicherweise mit drei Wicklungen ausgebildet. Die Wicklungen u, v und w umfassen jeweils ein Ableitungsende 9 und ein Sternpunktende 5 auf. Die Ableitungsenden u, v und w werden über Stromdurchführungen 8 nach außen geführt. Die Stromdurchführungen 8 sind hierbei gasdicht und hochspannungsfest am Gehäuse 2 angeordnet. Für die Stromdurchführungen 8 bezüglich der Sternpunktenden sind die Buchstaben x, y und z gewählt. Gemäß dem Stand der Technik werden die Sternpunktenden x, y und z elektrisch miteinander verbunden und ein Sternpunktkasten (nicht dargestellt) über dieses so gebildete Sternpunktende angeordnet.

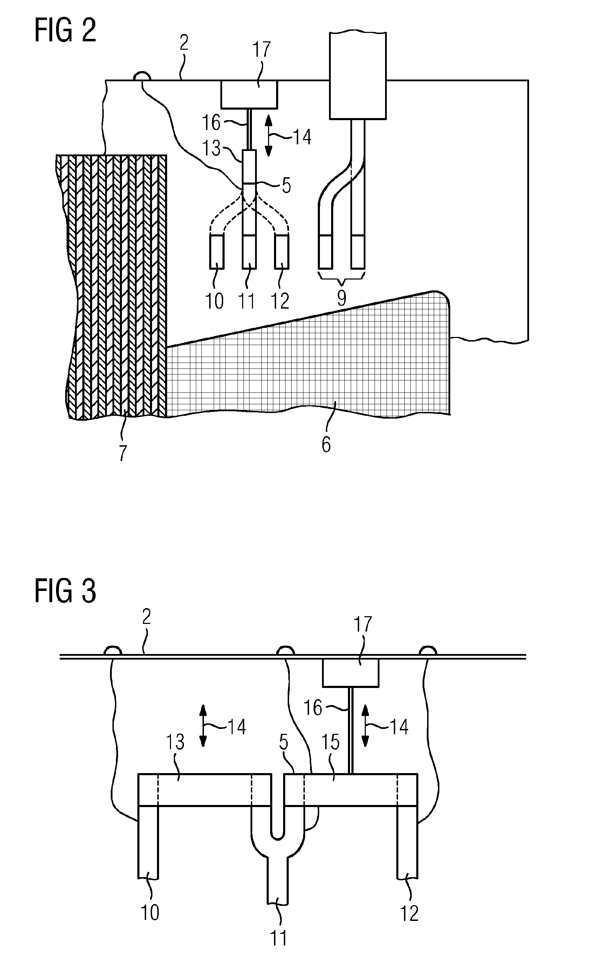

In der FIG 2 ist ein in schematischer Weise dargestellter Ständerwickelkopf 6 und ein Blechpaket 7 zu sehen.

Die so ausgebildete elektrodynamische Maschine 1 umfasst einen drehbar gelagerten Läufer 4 und einen um den Läufer 4 angeordneten Ständer. Der Ständer weist eine Ständerwicklung mit drei Wicklungen auf. Die Wicklungen weisen jeweils ein Ableitungsende 9 und ein erstes Sternpunktende 10, ein zweites Sternpunktende 11 und ein drittes Sternpunktende 12 auf. Das erste Sternpunktende 10 wird über eine Kurzschlussbrücke 13 mit dem zweiten Sternpunktende 11 elektrisch miteinander verbunden. Die Sternpunktenden 10, 11 und 12 werden dadurch zu einem Sternpunkt 5 verbunden. Dieser Sternpunkt 5 ist innerhalb des Gehäuses 2 angeordnet. Die Kurzschlussbrücke 13 ist nun derart ausgebildet, dass eine elektrische Trennung zwischen den Sternpunktenden 10, 11 und 12 erfolgen kann.

Dazu wird die Kurzschlussbrücke 13 in einer Richtung 14 bewegbar ausgebildet. Diese Richtung ist in der FIG 2 durch den Doppelpfeil dargestellt.

Eine Bewegung der Kurzschlussbrücke 13 nach oben führt zu einem Ziehen an der Kurzschlussbrücke 13 und somit zu einer elektrischen Trennung zwischen dem ersten Sternpunktende 10 und dem zweiten Sternpunktende 11.

In der FIG 3 ist eine um 90° gegenüber der FIG 2 gedrehte Darstellung zu sehen. Eine zweite Kurzschlussbrücke 15 verbindet das zweite Sternpunktende 11 mit dem dritten Sternpunktende 12. Für die zweite Kurzschlussbrücke 15 gilt entsprechendes wie für die Kurzschlussbrücke 13. Ein Ziehen in der Richtung 14 nach oben führt zu einer elektrischen Trennung zwischen dem zweiten Sternpunktende 11 und dem dritten Sternpunktende 12.

Eine elektrische Verbindung ist dann wieder möglich, wenn die Kurzschlussbrücke 13 als auch die zweite Kurzschlussbrücke 15 in Richtung 14 nach unten bewegt wird, so dass eine Berührung zwischen dem ersten Sternpunkt und dem zweiten Sternpunkt mit der Kurzschlussbrücke erfolgt. Genauso sollte auch eine Bewegung der zweiten Kurzschlussbrücke 15 in Richtung 14 nach unten folgen, wenn eine elektrische Verbindung wieder hergestellt werden soll.

Das Bewegen der Kurzschlussbrücken 13 und 15 erfolgt hierbei von außerhalb des Gehäuses 2 mechanisch. Ebenso ist denkbar, dass die Bewegung der Kurzschlussbrücken 13, 15 innerhalb des Gehäuses 2 elektrisch erfolgen kann.

Die Kurzschlussbrücke 13 wird mit einem unmagnetischen Gestänge 16 mit einer Vorrichtung 17 zum Heben und Senken verbunden.

Um nun im Servicefall Messungen durchführen zu können, sind Messleitungen 18, 19 und 20 ausgeführt, die die Sternpunktenden 10, 11 und 12 elektrisch über Messstellen 21, 22 und 23 nach außen außerhalb des Gehäuses 2 führen.

Die Stromwandler werden somit nach innen verlegt. Um nach der Trennung der Sternpunktenden 10, 11 und 12 mittels der Kurzschlussbrücken 13 und 15 die einzelnen Phasen messen zu können, werden mit den Kontaktstellen der einzelnen Anschlüsse des Sternpunktes mit Hilfe von Messstromdurchführungen nach außen verlegt. Dort können sie nach galvanischer Trennung der Phasenanschlüsse im Ausleitungsbereich des Generators für die gewünschten elektrischen Messungen der Ständerwicklung verwendet werden.

## Patentansprüche

1. Elektrodynamische Maschine (1),
umfassend einen drehbar gelagerten Läufer (4) und einen um den Läufer (4) angeordneten Ständer und einem um den Ständer angeordneten Gehäuse (2),
wobei der Ständer eine Ständerwicklung mit drei Wicklungen aufweist,
wobei die Wicklungen jeweils ein Ableitungsende (9) und ein Sternpunktende (10, 11, 12) aufweisen,
wobei die Sternpunktenden (10, 11, 12) über eine Kurzschlussbrücke (13, 15) miteinander zu einem Sternpunkt (5) verbunden sind,
wobei der Sternpunkt (5) innerhalb des Gehäuses (2) liegt, **dadurch gekennzeichnet, dass**
die Kurzschlussbrücke (13, 15) derart ausgebildet ist, dass eine elektrische Trennung zwischen den Sternpunktenden (10, 11, 12) erfolgen kann.

2. Elektrodynamische Maschine (1) nach Anspruch 1,
wobei die elektrische Trennung durch eine Bewegung der Kurzschlussbrücke (13, 15) erfolgt.

3. Elektrodynamische Maschine (1) nach Anspruch 2,
wobei die elektrische Trennung durch Ziehen der Kurzschlussbrücke (13, 15) in eine Richtung erfolgt.

4. Elektrodynamische Maschine (1) nach Anspruch 1, 2 oder 3,
wobei eine elektrische Verbindung zwischen den Sternpunktenden (10, 11, 12) durch Drücken in die Richtung (14) zu den Sternpunktenden (10, 11, 12) hin erfolgt.

5. Elektrodynamische Maschine (1) nach einem der Ansprüche 1 bis 4,
wobei das Bewegen der Kurzschlussbrücke (13, 15) außerhalb des Gehäuses (2) mechanisch erfolgt.

6. Elektrodynamische Maschine (1) nach einem der Ansprüche 1 bis 4,
wobei das Bewegen der Kurzschlussbrücke (13, 15) innerhalb des Gehäuses (2) elektrisch erfolgt.

7. Elektrodynamische Maschine (1) nach einem der vorhergehenden Ansprüche,
wobei die Kurzschlussbrücke (13, 15) mit einem im Wesentlichen unmagnetischen Gestänge (16) verbunden ist und das Gestänge (16) mit einer Vorrichtung (17) zum Heben und Senken verbunden ist.

8. Elektrodynamische Maschine (1) nach Anspruch 7,
wobei die Vorrichtung (17) einen Motor umfasst.

9. Elektrodynamische Maschine (1) nach einem der vorhergehenden Ansprüche,
wobei die Sternpunktenden (10, 11, 12) mit Messstromdurchführungen (8) außerhalb des Gehäuses (2) ausgebildet sind.

10. Elektrodynamische Maschine (1) nach Anspruch 9,
wobei Stromwandler zur Messung der einzelnen Phasen eines Sternpunktes (5) angeordnet sind.
